# EUROPEAN PATENT APPLICATION

(11) **EP 4 631 843 A1**
(43) Date of publication of application: **15.10.2025**
(21) Application number: 24315156.0
(22) Date of filing: 11.04.2024
(51) Int. Cl.: B63B 21/50

(54) **TENSIONED LEG PLATFORM MOORING LINE TENSIONING DEVICE**

(71) Applicant: Technip Energies France, 92741 Nanterre Cedex (FR)
(72) Inventor: Durix, Mathieu, 92741 Nanterre Cedex (FR); Di-Maggio, Giuseppe, 92741 Nanterre Cedex (FR); Bastet, Patrice, 92741 Nanterre Cedex (FR)
(74) Representative: Edson, Russell Gregory

(57) **Abstract**

A mooring line tensioning device is disclosed. The mooring line tensioning device may be coupled to a floating platform, such as a floating wind turbine platform. The mooring line tensioning device may include a housing, a proximal suspension element that can pivotably couple the housing to the floating platform, and a linearly displaceable element of a linear actuator that may extend through the base portion of the housing and may be linearly displaced relative to the housing. The linear actuator may be a jackscrew assembly and the linearly displaceable element may be a lifting screw of the jackscrew assembly. A mooring line may be coupled between a submerged anchor and a coupling element located at a distal end of the linearly displaceable element. Linear displacement of the linearly displaceable element by operation of the linear actuator can be used to adjust the tension of the mooring line.

## Description

### Technical Field

The present disclosure relates generally to floating platform securement, and more particularly although not necessarily exclusively, to a mooring line tensioning device that can be used to secure the position of an offshore floating platform such as a floating wind turbine platform.

### Background

Floating platforms can be used to support various structures or equipment upon a water surface. For example, a wind turbine can be mounted to a floating wind turbine platform and deployed into a body of water, whereafter wind-caused rotation of a rotor blade of the wind turbine can be used to drive a generator to produce electrical energy. A floating platform may be deployed at an offshore location, where wind or wave action may subject the platform to undesirable movements or changes in location or orientation. A mooring system can be employed to secure the location and orientation of a floating platform, and to prevent or minimize other movements such as tilting or bobbing. At least some mooring systems employ multiple mooring lines that can be anchored or otherwise secured to the floor/bed of the body of water at one end and connected to the floating wind platform at an opposite, end. While proper mooring line length to produce a desired mooring line tension can be estimated prior to deployment, desired tension may not be achieved upon actual mooring line installation due to component tolerance stack up, greater than anticipated anchor settlement, etc. Resultantly disconnecting and retrieving an already installed mooring line to make a required length adjustment can result in a significant and undesirable expenditure of time and resources.

### Summary

Example No. 1 is a mooring line tensioning device. The mooring line tensioning device includes an elongate housing having a base portion at a distal end, and an open interior. A suspension element is coupled to the elongate housing at a proximal end thereof and is positionable to pivotably couple the elongate housing to a floating platform. A linear actuator is coupled to the base portion, and a linearly displaceable element of the linear actuator extends through the base portion and into the open interior of the elongate housing. A connecting element at a distal end of the linearly displaceable element is positionable to couple the linearly displaceable element to an anchored mooring line. The linearly displaceable element is linearly displaceable relative to the elongate housing to adjust a tension of the anchored mooring line.

Example No. 2 is Example No. 1, wherein the housing further includes a pair of opposed suspension element mounting arms that are separated by a space at the proximal end thereof. There is a bore through each arm, and the bores are aligned on a common central axis.

Example No. 3 is Example No. 2, wherein the suspension element includes a pivot bore extending therethrough in a direction perpendicular to a central axis of the suspension element, and the suspension element resides in the space between the suspension element mounting arms of the housing and is pivotably coupled to the housing by a coupling pin through the bores in the suspension element mounting arms and the pivot bore in the suspension element.

Example No. 4 is the Examples of any of the preceding paragraphs in this Summary, further including at least one lifting tab extending from the suspension element, the housing, or both, to lift and position the device relative to the floating platform.

Example No. 5 is the Examples of any of the preceding paragraphs in this Summary, wherein the linear actuator is a jackscrew assembly and the linearly displaceable element is a lifting screw of the jackscrew assembly, the jackscrew assembly further including a mounting base that is secured to the base of the housing.

Example No. 6 is Example No. 5, wherein the jackscrew assembly further includes a nut in threaded engagement with the lifting screw and a worm drive having a worm wheel coupled to the nut, and wherein the worm drive is operable to raise or lower the lifting screw relative to the housing by rotation of the nut.

Example No. 7 is Example No. 6, wherein the jackscrew assembly further includes at least one remotely operated vehicle (ROV) bucket coupled to a rotatable input shaft of the worm drive, and the ROV bucket is engageable by a submersible torque tool to raise or lower the lifting screw by rotating the input shaft of the worm drive.

Example No. 8 is a floating platform position securement system including a mooring line tensioning device. The mooring line tensioning device includes an elongate housing having a base portion at a distal end, and an open interior. A suspension element is coupled to the elongate housing at a proximal end thereof and is positionable to pivotably couple the elongate housing to the floating platform. A linear actuator is coupled to the base portion, with a linearly displaceable element of the linear actuator extending through the base portion and into the open interior of the elongate housing. A connecting element at a distal end of the linearly displaceable element is positionable to couple the linearly displaceable element to an anchored mooring line. The linearly displaceable element is linearly displaceable relative to the elongate housing to adjust a tension of the anchored mooring line. A mooring line tensioning device coupling structure located on the floating platform includes a suspension element retention cavity that is positionable to receive and releasably retain the suspension element of the mooring line tensioning device such that the mooring line tensioning device is pivotably suspendible from the floating platform by engagement of the suspension element with the suspension element retention cavity.

Example No. 9 is Example No. 8, wherein the floating platform is a floating wind turbine platform.

Example No. 10 is any of Example No. 8 to Example No. 9, wherein the housing of the mooring line tensioning device further includes a pair of opposed suspension element mounting arms that are separated by a space at the proximal end thereof. Each arm includes a bore therethrough, and the bores are aligned on a common central axis. The suspension element also includes a pivot bore extending therethrough in a direction perpendicular to a central axis of the suspension element. The suspension element resides in the space between the suspension element mounting arms of the housing and is pivotably coupled to the housing by a coupling pin through the bores in the suspension element mounting arms and the pivot bore in the suspension element, whereby the housing of the mooring line tensioning device is rendered rotatable in a first dimension.

Example No. 11 is Example No. 10, wherein the suspension element and the suspension element retention cavity are both cylindrical in shape and the suspension element is rotatable within the suspension element retention cavity, such that the housing of the mooring line tensioning device is rendered rotatable in a second dimension that is perpendicular to the first dimension by the rotatability of the suspension element relative to the suspension element retention cavity.

Example No. 12 is any of Example No. 8 to Example No. 11, wherein the linearly displaceable element of the mooring line tensioning device is a lifting screw of a jackscrew assembly that is secured to the base of the mooring line tensioning device housing.

Example No. 13 is Example No. 12, further comprising a remotely operated vehicle (ROV) bucket coupled to a rotatable input shaft of the jackscrew assembly, the ROV bucket engageable by a submersible rotary tool to raise or lower the lifting screw of the mooring line tensioning device by rotating the input shaft of the jackscrew assembly.

Example No. 14 is any of Example No. 8 to Example No. 13, wherein the mooring line tensioning device is pivotably suspended from the floating platform by engagement of the suspension element of the mooring line tensioning device with the suspension element retention cavity of the floating platform, and a submerged mooring line couples a submerged anchor to the connecting element of the mooring line tensioning device.

Example No. 15 is any of Example No. 8 to Example No. 14, wherein the mooring line tensioning device coupling structure is located in a float that is affixed to a pontoon of the floating platform.

Example No. 16 is a method including coupling a mooring line tensioning device to a floating platform having a mooring line tensioning device coupling structure. The mooring line tensioning device includes an elongate housing having a base portion at a distal end, and an open interior. A suspension element is coupled to the elongate housing at a proximal end thereof and is engaged with and releasably retained in a suspension element retention cavity of the mooring line tensioning device coupling structure. A linear actuator is coupled to the base portion, and a linearly displaceable element of the linear actuator extends through the base portion into the open interior of the elongate housing and is linearly displaceable relative to the elongate housing. A connecting element is located at a distal end of the linearly displaceable element of the mooring line tensioning device. The method further includes coupling an anchored mooring line to the connecting element of the mooring line tensioning device, and adjusting a tension of the mooring line using the mooring line tensioning device by operating the linear actuator to cause a linear displacement of the linearly displaceable element relative to the housing.

Example No. 17 is Example No. 16, wherein the floating platform is a floating wind turbine platform.

Example No. 18 is any of Example No. 16 to Example No. 17, wherein the linear actuator is a jackscrew assembly, the linearly displaceable element is a lifting screw of the jackscrew assembly, and wherein the lifting screw is linearly displaced relative to the housing by rotating an input shaft of the jackscrew assembly with a submersible rotary tool to adjust a tension of the mooring line.

Example No. 19 is Example No. 18, wherein the submersible rotary tool is operated by a remotely operated vehicle (ROV).

Example No. 20 is any of Example No. 16 to Example No. 19, wherein the suspension element retention cavity is located in a float of the floating platform, and coupling the mooring line tensioning device to the floating platform includes releasably locking the suspension element of the mooring line tensioning device in rotatable engagement with the suspension element retention cavity.

### Brief Description of the Drawings

FIG. 1 is a schematic representation of a floating wind turbine according to one example of the present disclosure.
FIG. 2 is an enlarged view of a float of the floating wind turbine of FIG. 1, to which is coupled a plurality of mooring lines.
FIG. 3 schematically illustrates a mooring line tensioning device according to one example of the present disclosure.
FIG. 4A depicts the mooring line tensioning device of FIG. 3 in an extended position.
FIG. 4B depicts the mooring line tensioning device of FIG. 3 in a retracted position.
FIG. 5 schematically illustrates a suspension element of a mooring line tensioning device according to one example of the present disclosure.
FIG. 6 schematically illustrates a linearly displaceable element of a mooring line tensioning device according to one example of the present disclosure.
FIG. 7 schematically illustrates a linear actuator of a mooring line tensioning device in the form of a jackscrew assembly according to one example of the present disclosure.
FIG. 8 schematically illustrates a worm drive portion of the jackscrew assembly of FIG. 7.
FIG. 9 depicts a submersible torque tool that is usable to adjust the position of a mooring line tensioning device according to one example of the present disclosure.
FIG. 10 depicts a submersible locking element that is usable to secure the tensioning position of a mooring line tensioning device according to one example of the present disclosure.
FIG. 11A schematically illustrates a mooring line tensioning device in the process of being coupled to a float according to one example of the present disclosure.
FIG. 11B schematically illustrates the mooring line tensioning device of FIG. 11A coupled to the float.
FIG. 12 is a flowchart of a method for mooring a floating platform according to one example of the present disclosure.

### Detailed Description

Certain aspects and examples of the present disclosure relate to a mooring line tensioning device, and to use of a mooring line tensioning device to adjustably couple an anchored mooring line to a float or floating platform deployed in a body of water. The floating platform may be a tensioned leg platform. The floating platform may be a floating wind turbine platform that supports a wind turbine. The mooring line tensioning device may include a housing that can be pivotably coupled to a float or a floating platform by a suspension element, and a linear actuator that can be affixed to the housing. A linearly displaceable element of the linear actuator may be coupled to the mooring line such that operation of the linear actuator can lessen or increase tension in the mooring line.

Examples of a floating platform, such as a floating wind turbine platform, can include a plurality of spaced apart semisubmersible columns that are arranged in a desired pattern. For example, the columns of a floating platform may be arranged in a polygonal pattern, with one column of the plurality of columns located at each vertex of the polygon. In one particular example of such an arrangement, the floating platform may have a triangular shape, with one column of three total columns located at each vertex of the triangle. When the floating platform is a floating wind turbine platform, a wind turbine tower may be attached to and extend upward from a top of one of the columns, or may otherwise be located within and extend upward from an area bounded by the columns.

In some examples, the columns can each have a hollow internal volume and can function as vertical pontoons that provide buoyancy to the floating platform. Each of the columns may also contain an amount of ballast to impart floating stability to the floating platform. The columns may be rigidly interconnected by a plurality of braces arranged in any of various configurations. The braces may also be hollow. In some examples, at least some of the braces may act as pontoons that can provide additional buoyancy to the floating platform. In some examples, at least some of the pontoons may also contain ballast. In some examples, a floating platform may also include a float. For example, a float may be secured to a bottom of at least one of the columns to help keep the floating wind turbine platform afloat.

A mooring system can be employed to secure the location and orientation of a floating platform, such as a floating wind turbine platform. In some examples, a mooring system may include a plurality of gravity anchors or suction anchors that are located on the floor of the body of water. Mooring lines may be used to couple a floating platform to the anchors in a tensioned leg arrangement. Once coupled to the anchors by the mooring lines, movements of the floating platform such as tilting, bobbing, or drifting can be prevented or minimized.

The mooring lines of a tensioned leg mooring system require a degree of tension to properly secure the position and control movement of the floating platform to which the mooring lines are connected. Mooring line tension depends on mooring line length. Therefore, if mooring line length is miscalculated due to component tolerances or for other reasons, or if the anchor depth deviates from an expected depth due to settling, etc., resulting mooring line tensions may be lesser or greater than desired. Examples of a mooring line tensioning device can be used to account for such tension deviations by facilitating a tension adjustment of an installed mooring line.

In some examples, a mooring line tensioning device may be interposed between an upper end of a mooring line and a coupling point on a floating platform. In other examples, a mooring line tensioning device may be interposed between a lower end of a mooring line and an anchor. Examples of the mooring line tensioning device may include an elongate housing having a base portion at a distal end thereof. In some examples, the housing may be a frame or a similar structure having an open interior. A suspension element can be coupled to the housing at a proximal end thereof and can be positionable to pivotably couple the housing to the floating platform. The manner in which the suspension element is coupled to the platform and to the housing may permit the mooring line tensioning device to rotate in two dimensions relative to the floating platform.

A linearly displaceable element of a linear actuator may extend through the base portion of the housing and into the open interior thereof. The linear actuator may be coupled to the base portion of the housing. Operation of the linear actuator may result in a linear displacement of the linearly displaceable element relative to the housing. In some examples, the linearly displaceable element may be a threaded lifting screw of a jackscrew assembly that is coupled to the base portion of the housing. The jackscrew assembly may include a worm drive of which the lifting screw is a part. Rotation of a worm gear of the worm drive can produce a linear displacement of the lifting screw relative to the housing. The worm drive may include an input shaft or a similar element that may be engaged by a submersible tool, such as a submersible torque tool operated by a remotely operated vehicle (ROV). This allows the mooring line tensioning device to be operated while in an installed and submerged or semi-submerged position.

A connecting element may be located at a distal end of the threaded rod. In some examples, the connecting element can couple the linearly displaceable element to an upper end of a mooring line. Being that the connecting element is a part of or otherwise coupled to the distal end of the linearly displaceable element, the connecting element is linearly displaceable relative to the housing along with the linearly displaceable element. Therefore, with the lower end of a mooring line connected to an anchor, the upper end of the mooring line coupled to the connecting element of the mooring line tensioning device, and the mooring line tensioning device coupled to the floating platform, the mooring line tensioning device can be used to adjust the amount of tension on the mooring line. Particularly, operation of the linear actuator in one direction can cause a linear displacement of the linearly displaceable element toward a proximal end of the mooring line tensioning device housing and toward the platform, which can increase the amount of tension on the mooring line. Operation of the linear actuator in an opposite direction can cause a linear displacement of the linearly displaceable element toward a distal end of the mooring line tensioning device housing and away from the platform, which can reduce the amount of tension on the mooring line. In either case, the mooring line tension adjustment can occur without the need to disconnect and retrieve the mooring line or decouple the mooring line tensioning device from the floating platform.

' Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

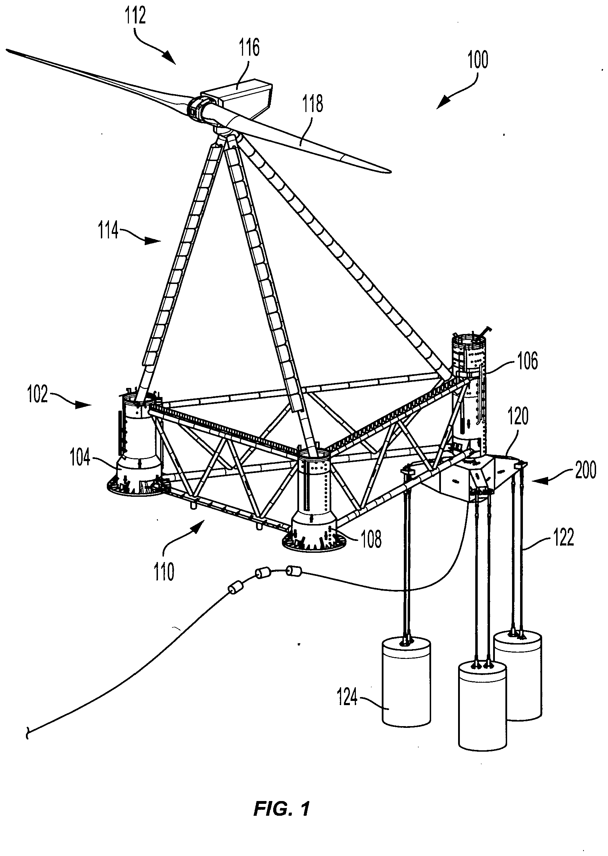

One example of a floating wind turbine 100 is illustrated in FIG. 1. As shown, the floating wind turbine 100 includes a floating wind turbine platform 102. In this example, the floating wind turbine platform 102 includes three spaced apart semisubmersible columns 104, 106, 108. The columns 104, 106, 108 form vertical pontoons that impart a degree of buoyancy to the floating wind turbine platform 102. In this example of the floating wind turbine platform 102, the columns 104, 106, 108 are respectively arranged at three points of a triangle. A different number of columns and other arrangements of the columns are possible in other examples.

The columns 104, 106, 108 can be rigidly interconnected by a plurality of braces 110. The braces 110 may be arranged in any of various configurations, and can be both horizontally oriented and vertically oriented, as shown. In some examples, at least some of the braces 110 may also be hollow and may act as pontoons that can provide additional buoyancy to the floating wind turbine platform 102. In some examples, at least some of the braces may contain ballast, such as water ballast.

A wind turbine 112 can be affixed to the floating wind turbine platform 102. In this example, the wind turbine 112 includes an upwardly extending support structure 114 having three separate legs that are respectively affixed to the columns 104, 106, 108. In other examples, the wind turbine 112 may include a single tower that is securely affixed to the top of one of the columns 104, 106, 108. Other wind turbine locations and affixation techniques relative to the floating wind turbine platform 102 are also possible in other examples. As shown, the wind turbine 112 can also include a nacelle 116 enclosing a gearbox and a generator, and a rotatable rotor blade 118. The generator may be operated to produce electrical energy by wind-driven rotation of the rotor blade 118.

As represented in FIG. 1, a float 120 may be a part of the floating wind turbine platform 102. In this example, the float 120 is attached to a bottom end of the column 106 of the floating wind turbine platform 102. In other examples, the float 120 may instead be attached to the bottom end of column 104 or column 108, or a float 120 may be attached to more than one of the columns 104, 106, 108. In some examples, the floats 120 can be sources of buoyancy for the floating wind turbine platform 102. To that end, the floats 120 may be hollow or substantially hollow structures, and may be constructed from steel or a similarly sturdy material. As with the columns 104, 106, 108, the floats 120 may contain ballast, such as water ballast, to help stabilize the floating wind turbine platform 102 upon deployment thereof to a body of water.

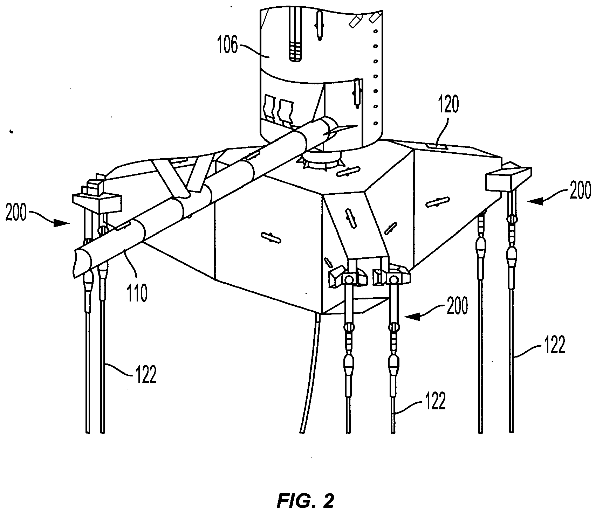

The float 120 may also include coupling points for a plurality of mooring lines 122 of a mooring system that can be used to secure the position of the floating wind turbine platform 102 in a body of water. The mooring system can also include one or more anchors 124 that can be located along the floor of the body of water. The anchors 124 may be gravity anchors, suction anchors, or another type of anchor (e.g., a driven piling) that can be maintained in a fixed position relative to the floor of the body of water and can have a lower end of at least one mooring line 122 coupled thereto. In this example, there are three anchors 124 and six total mooring lines 122 per float 120, but the number of mooring lines 122 and anchors 124 can vary in other examples. As may be more clearly observed in the enlarged view of FIG. 2, an upper end of a mooring line 122 associated with a given float 120 can be coupled to the float 120, and thereby to the overall floating wind turbine platform 102, by a mooring line tensioning device 200.

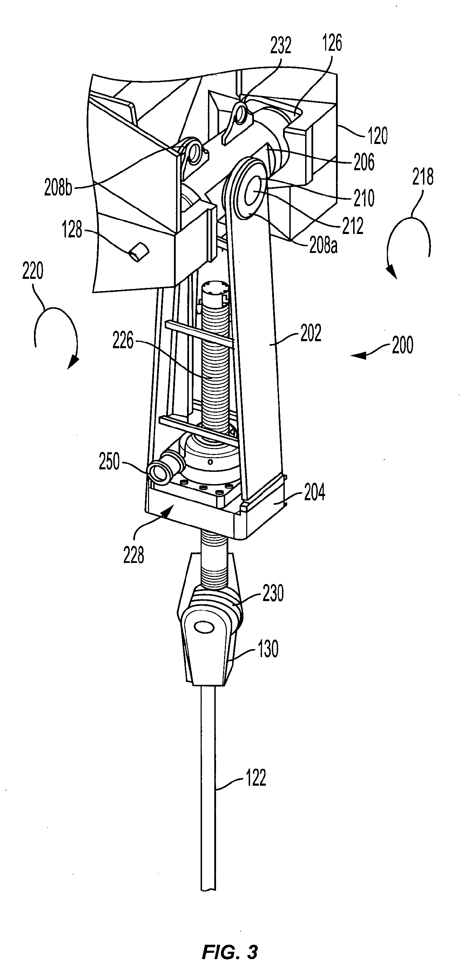

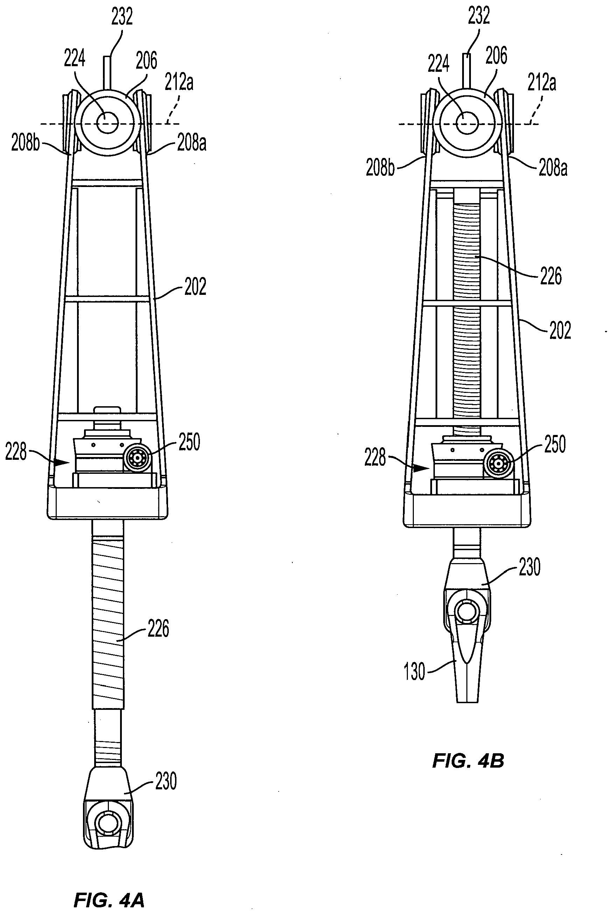

One example of the mooring line tensioning device 200 is schematically illustrated in the enlarged views of FIG. 3 and FIGS. 4A-4B. This example of the mooring line tensioning device 200 includes an elongate housing 202. The housing 202 may have a base portion 204 at a distal end thereof. A shown, the housing 202 may be a substantially open frame having various interconnected bracing or other members, or as another structure. In any case, the housing 202 can have an open or substantially open interior.

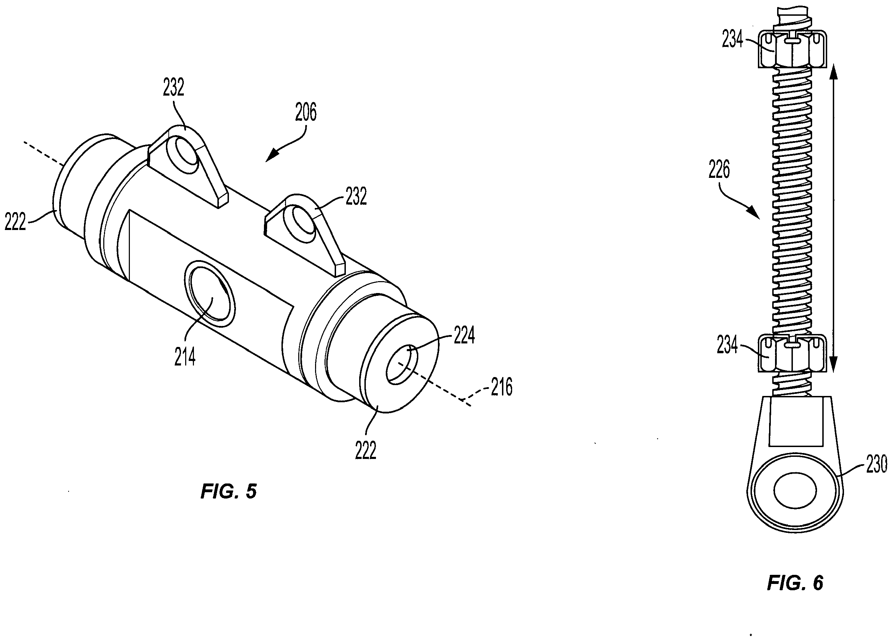

A suspension element 206 can be coupled to the housing 202 at a proximal end thereof. The suspension element 206 can be positionable and usable to pivotably couple the housing 202 to the float 120. For example, the suspension element 206 can be coupled to the housing 202 and to the float 120 in a manner that results in two-dimensional rotation (pivoting) of the mooring line tensioning device 200 relative to the float 120 and the floating wind turbine platform 102. To this end, the housing 202 may include a pair of opposed suspension element mounting arms 208a, 208b that are separated by a space at the proximal end of the housing 202. A bore 210a, 210b may extend respectively through each suspension element mounting arm 208a, 208b, and the bores 210a, 210b may be aligned on a common central axis 212a. A cooperating pivot bore 214, as depicted in detail in FIG. 5, can also extend through the suspension element 206 in a direction perpendicular to the central axis 216 of the suspension element 206. The suspension element 206 may be cylindrical in shape, but other shapes or a combination of shapes is also possible. The suspension element 206 may be arranged in the space between the suspension element mounting arms 208a, 208b of the housing 202. A coupling pin 212 may pass through the bores 210a, 210b in the suspension element mounting arms 208a, 208b and through the pivot bore 214 in the suspension element 206 to pivotably couple the suspension element 206 to the housing 202. The mooring line tensioning device 200 may thereby rotate about the coupling pin 212 and in a first dimension 218 relative to the float 120 and the floating wind turbine platform 102. For purposes described in more detail below, at least one lifting tab 232 may extend from the suspension element 206 for lifting and positioning the mooring line tensioning device 200 relative to the float 120 during a mooring line tensioning device coupling or decoupling operation.

As can be observed in FIG. 3, the float 120 may also include a suspension element retention cavity 126 of a shape that mimics or otherwise cooperates with the suspension element 206. The suspension element 206 may be received and releasably retained within the suspension element retention cavity 126. The cylindrical shape of the suspension element 206 and the cooperating shape of the suspension element retention cavity 126 can facilitate rotation of the suspension element 206 within the receiving portion of the float 120, and rotation of the mooring line tensioning device 200 in a second dimension 220 relative to the float 120 and the floating wind turbine platform 102. By this arrangement, the rotation axis of the suspension element 206 in the second dimension 220 also occurs in-line with the rotation axis of the suspension element 206 in the first dimension (i.e., in a plane), which can prevent undesired rotation of the mooring line tensioning device 200 by a moment of a force resulting from out-of-plane components.

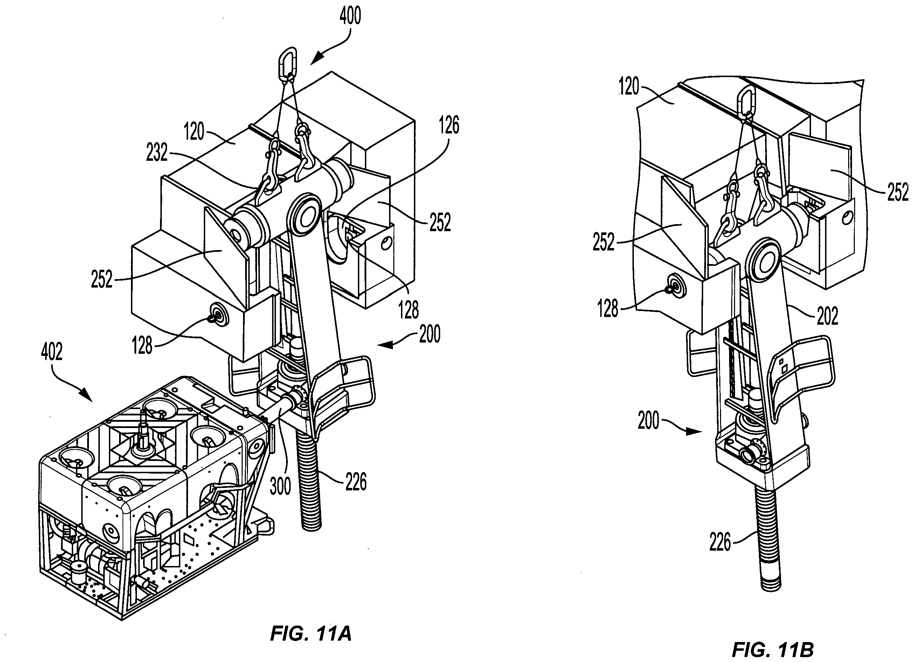

The suspension element 206 may include bearings or bushings 222 to facilitate rotation of the suspension element 206 within the suspension element retention cavity 126. In some examples, the suspension element 206 can be releasably retained within the suspension element retention cavity 126, and the mooring line tensioning device 200 can be maintained in a releasably connected arrangement with the, float 120, by slidable retention pins 128 that pass through the float 120 and into retention bores 224 located in opposite ends of the suspension element 206, and which are further described below with reference to FIGS. 11A-11B. The retention pins 128 may be appropriately positioned to retain or release the suspension element 206 from the suspension element retention cavity 126 of the float 120 by, for example, an end effector of a ROV.

A linearly displaceable element of a linear actuator may extend through the base portion 204 of the housing 202 and into the open interior thereof. The linear actuator may be coupled to the base portion 204 of the housing 202. The linear actuator may be any of several types of linear actuators. For example, the linear actuator may be a hydraulic or pneumatic cylinder and the linearly displaceable element may be a piston rod. In other examples, the linear actuator may be a screw drive, such as a screw drive having a hydraulic or pneumatic motor, or a screw drive driven by a separate hydraulically, pneumatically, or electrically-driven rotary tool.

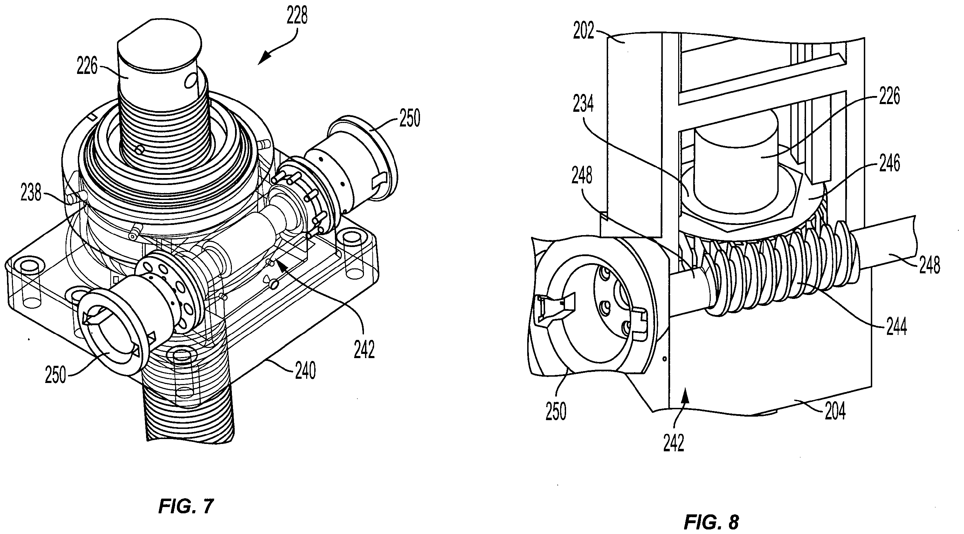

In the particular examples illustrated in the drawing figures, the linear actuator is a mechanically driven jackscrew assembly 228 and the linearly displaceable element is a lifting screw 226 of the jackscrew assembly 228. The lifting screw 226 may be indirectly coupled to the base portion 204 of the housing 202 by other components (e.g., a drive housing) of the jackscrew assembly 228. Rotation of a nut 234 (see FIG. 8) in threaded engagement with the lifting screw 226 can result in a linear displacement of the lifting screw 226 relative to the housing 202. Particularly, rotation of the nut 234 in one direction can cause the lifting screw 226 to be linearly displaced in a distal-to-proximal direction and toward the float 120, while rotation of the nut 234 in the opposite direction can cause the lifting screw 226 to be linearly displaced in a proximal-to-distal direction and away from the float 120.

A connecting element 230 may be located at a distal end of the lifting screw 226. The connecting element 230 may be an integral portion of the lifting screw 226 or may be a separate element that is attached to the lifting screw 226. The connecting element 230 can couple the lifting screw 226 to an upper end of a mooring line 122. In another example where the mooring line tensioning device 200 couples the mooring line 122 to an anchor instead of the float 120, the connecting element 230 can couple the lifting screw 226 to a lower end of the mooring line 122. The connecting element 230 may be, for example, a hook, a clip, or another mechanism to which the mooring line 122 can be attached. In the example of FIG. 3 and also FIG. 6, the connecting element 230 is an eyelet end fitting that is threaded to or otherwise affixed to the distal end of the lifting screw 226, and is received within and pivotably pinned to a clevis-type connector 130 to which the upper end of the mooring line 122 is attached.

FIG. 4A depicts the mooring line tensioning device 200 in a tension-reducing position wherein a substantial portion of the lifting screw 226 extends distally from the base 204 of the housing 202. FIG. 4B depicts the mooring line tensioning device 200 in a tension-increasing position wherein a substantial portion of the lifting screw 226 is retracted into the open interior of the housing 202. It should be understood at least by observation of FIGS. 4A-4B that the connecting element 230 is linearly displaceable relative to the housing 202 and the float 120 along with the lifting screw 226. Therefore, with the lower end of the mooring line 122 connected to an anchor 124, the upper end of the mooring line 122 coupled to the connecting element 230 of the mooring line tensioning device 200, and the mooring line tensioning device 200 coupled to the float 120, the mooring line tensioning device 200 can be used to adjust the amount of tension on the mooring line 122. Particularly, rotation of the nut 234 in one direction can cause a linear displacement of the lifting screw 226 toward the proximal end of the housing 202 and the float 120, which may pull the mooring line 122 toward the water surface and increase the amount of tension on the mooring line 122. Contrarily, rotation of the nut 234 in an opposite direction can cause a linear displacement of the lifting screw 226 toward a distal end of the housing 202 and away from the float 120, which may lower the mooring line deeper into the water and reduce the amount of tension on the mooring line 122. The position of the lifting screw 226 and the connecting element 230 relative to the housing 202 of mooring line tensioning device 200 may be adjusted to any number of positions between the positions shown in FIGS. 4A and 4B, which respectively represent the maximum extended and retracted positions of the lifting screw 226.

One example of the lifting screw 226 and associated connecting element 230 is shown in more detail in FIG. 6. The thread pitch of the lifting screw 226 may be selected to produce a desired increment of linear displacement per revolution of the nut 234 or a desired linear displacement speed. As shown, the nut 234, which may be a castle nut, is in threaded engagement with the lifting screw 226. As represented in FIG. 8 and as described below, the nut 234 is free to rotate but the linear position of the nut 234 relative to the housing 202 is fixed. Rotation of the nut can be generated by engagement of the nut 234 with a rotatable worm wheel 246 of the jackscrew assembly 228. Thus, in FIG. 6, the upper depiction of the nut 234 represents the linear position of the lifting screw 226 relative to the nut 234 when the lifting screw 226 is in a fully extended position as shown in FIG. 4A, and the lower depiction of the nut 234 represents the linear position of the lifting screw 226 relative to the nut 234 when the lifting screw 226 is in a fully retracted position as shown in FIG. 4B. The double-sided arrow in FIG. 6 indicates the maximum linear travel distance of the lifting screw 226.

Further details of one example of the jackscrew assembly 228 are illustrated in FIGS. 7-8. As shown, the jackscrew assembly 228 may include a drive housing 238. The drive housing 238 can include a mounting base 240. The mounting base 240 may have mounting holes that are usable to affix the drive housing 238 to the base portion 204 of the mooring line tensioning device housing 202. Other affixation techniques are also possible. The jackscrew drive housing 238 may enclose and retain various drive components, such as the components of a worm drive 242, a bevel gear drive, or another drive mechanism for engaging and rotating the nut 234 to produce a linear displacement of the lifting screw 226. The worm drive 242 may include a worm gear 244 that is engaged with the worm wheel 246 in a typical manner, such that rotation of the worm gear 244 can rotate the worm wheel 246. As illustrated in FIG. 8, the nut 234 can be engaged with and retained within the worm wheel 246 so that rotation of the worm wheel 246 will produce a like rotation of the nut 234. In the example shown, the nut 234 is retained within and engaged with a hollow central bore or cavity in the worm wheel 246. Consequently, rotation of the worm wheel 246 by the worm gear 244 can also rotate the nut 234 and thereby produce a linear displacement of the lifting screw 226 relative to the mooring line tensioning device housing 202. In some examples, the worm wheel 246 can be an integral component of the lifting screw 226.

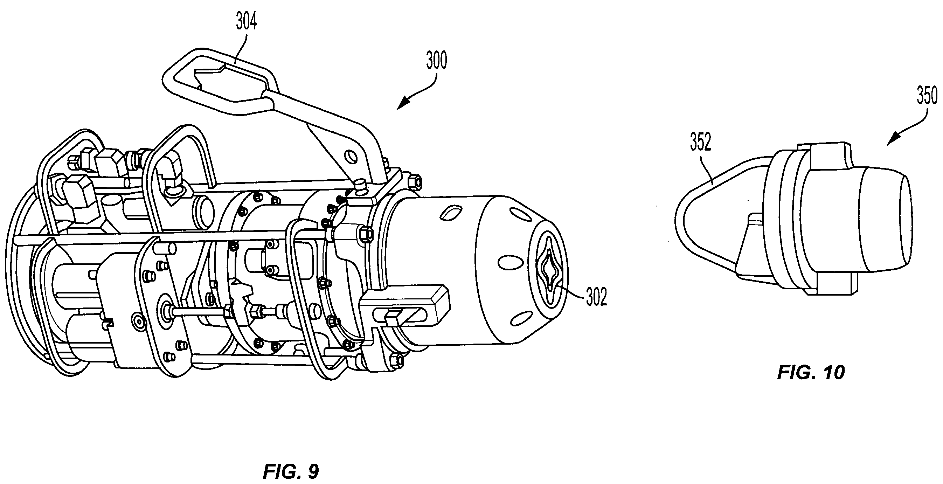

The worm drive 242 may include an input shaft 248 or a similar element that facilitates operation of the worm drive 242 and resulting linear displacement of the lifting screw 226. The input shaft 248 may extend axially from one or both ends of the worm gear 244 in some examples. Given that the jackscrew assembly 228 is likely to be partially or completely submerged at the time a mooring line tension adjustment is needed, operation of the jackscrew assembly 228 may be performed below the water surface by a ROV or other suitable equipment. For example, operation of the jackscrew assembly 228 may be performed by engaging the input shaft 248 of the worm gear 244 and rotating the worm gear 244 using a submersible rotary tool. One example of a submersible rotary tool 300 that can be used for this purpose is illustrated in FIG. 9. Such a submersible rotary tool 300 may include an actuator end with a motor-driven rotatable element 302 that can engage the worm gear input shaft 248 and operate the worm drive 242 to linearly displace the lifting screw 226. The submersible rotary tool 300 may also include a ROV coupling component 304 by which a ROV manipulator arm can be coupled to or otherwise grasp and manipulate the submersible rotary tool 300.

To facilitate proper alignment and engagement between the submersible rotary tool 300 and the jackscrew assembly 228 of the mooring line tensioning device 200, an ROV bucket 250 may be coupled to the jackscrew assembly 228. The ROV bucket 250 can also serve as a dock for the submersible rotary tool 300 while the submersible rotary tool 300 operates the jackscrew assembly 228. When the worm gear 244 of the jackscrew assembly has two input shafts 248 as depicted in FIG. 8, each input shaft 248 may have a ROV bucket 250 associated therewith as shown in FIG. 9.

As illustrated in FIG. 10, a submersible lockout element 350 may be used to prohibit a change in the linear position of the lifting screw 226 relative to the housing 202 and a resultant change in the tension in a mooring line 122 coupled thereto. For example, submersible lockout elements 350 may be removably inserted into each of the ROV buckets 250 of the mooring line tensioning device 200 for this purpose. The submersible lockout element 350 may also include a ROV coupling component 352 by which a ROV manipulator arm can be coupled to or otherwise grasp and manipulate the submersible lockout element 350.

FIGS. 11A-11B illustrate one example of pivotably coupling the mooring line tensioning device 200 to the float 120 of the floating wind turbine platform 102. The linear position of the lifting screw 226 relative to the housing 202 of the mooring line tensioning device 200 may be initially set or may have been preset prior to coupling the mooring line tensioning device 200 to the float 120. As shown in FIG. 11A, the mooring line tensioning device 200 may be lifted into place by, for example, connecting a rigging assembly 400 to the lifting tabs 232 affixed to the suspension element 206 and using a crane or hoist on the floating wind turbine platform 102 (or a vessel) to lift the mooring line tensioning device 200 using the rigging assembly 400. The mooring line tensioning device 200 may initially be lifted to a position where the elevation of the suspension element 206 is higher than the elevation of the suspension element retention cavity 126 in the float 120. The mooring line tensioning device 200 may thereafter be lowered in a guided fashion such that the suspension element 206 becomes seated in the suspension element retention cavity 126 as shown in FIG. 11B. The rigging assembly 400 can then be removed.

In at least some examples, a ROV 402 may be used to observe underwater component alignment and other aspects of a mooring line tensioning device coupling operation. Guide plates 252 may also be located on the float 120 to help direct the suspension element 206 into the suspension element retention cavity 126. The suspension element 206 may be releasably locked into the suspension element retention cavity 126 by engaging the retention pins 128 with the retention bores 224 in the suspension element 206, as previously described. If a mooring line tension adjustment is required after the mooring line tensioning device 200 is coupled to the float 120, the tension adjustment can be made by using the ROV 402 to operate the submerged jackscrew assembly 228 with the submersible rotary tool 300. In such a case, it is possible for mooring line tension to be determined from the amount of torque applied to the jackscrew assembly 228 by the submersible rotary tool 300.

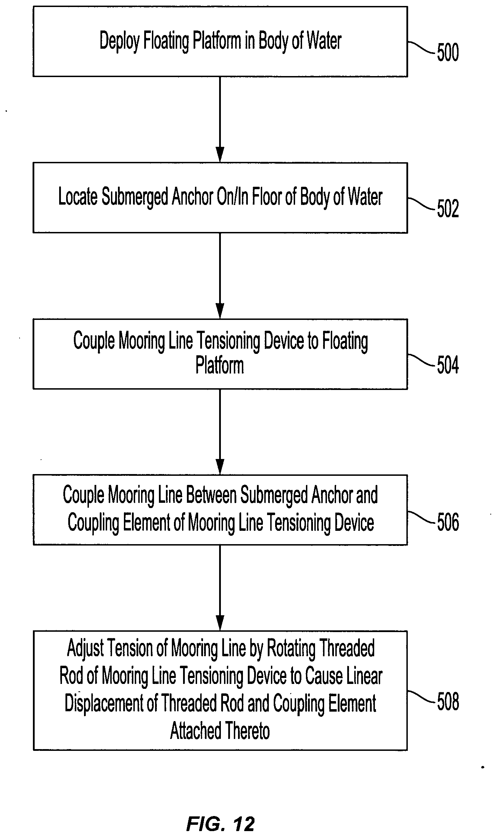

FIG. 12 is a flowchart representing a method of securing the position of a floating platform in a body of water. As indicated in block 500 of FIG. 12, a floating platform can be initially deployed in a body of water. The floating platform may include an amount of ballast or may otherwise be stabilized to permit the floating platform to be moved to a desired location within the body of water. The body of water can be an offshore location, such as an offshore sea or ocean location. For purposes described below, the floating platform may include a mooring line tensioning device coupling structure.

As indicated in block 502, a submerged anchor may be located on or in a floor (e.g., sea floor) of the body of water. The type of submerged anchor used can vary. For example, the submerged anchor may be a gravity anchor, a suction anchor, a driven pile, a drag anchor, etc. When multiple anchors are used, the anchors may all be of the same type or different types of anchors may be used.

As indicated in block 504, a mooring line tensioning device can be coupled to the floating platform to provide for tension adjustment of a mooring line used to secure the position of the floating platform. In some examples, the mooring line tensioning device may include an elongate housing having a base portion at a distal end, and an open interior. For example, the housing may be a substantially open frame in some examples. A suspension element may be coupled to the elongate housing of the mooring line tensioning device at a proximal end thereof. In some examples, the housing can include a pair of opposed suspension element mounting arms that are separated by a space at the proximal end thereof, and a bore may extend through each arm such that the bores aligned on a common central axis. A pivot bore can also extend through the suspension element in a direction perpendicular to a central axis of the suspension element. The suspension element may be arranged in the space between the suspension element mounting arms of the housing and may be pivotably coupled to the housing by a coupling pin that passes through the bores in the suspension element mounting arms and the pivot bore in the suspension element. This coupling of the housing and the suspension element of the mooring line tensioning device can allow the housing to pivot in a first dimension.

The housing of the mooring line tensioning device can be pivotably coupled the floating platform by engagement of the suspension element with a suspension element retention cavity of the mooring line tensioning device coupling structure. The suspension element and the suspension element retention cavity may have cooperating cylindrical shapes, which can allow the suspension element to rotate within the suspension element retention cavity. This rotation of the suspension element relative to the suspension element retention cavity can allow the housing of the mooring line tensioning device to pivot in a second dimension that may be substantially perpendicular to the first dimension.

A linearly displaceable element of a linear actuator may extend through the base portion of the mooring line tensioning device housing and into an open interior thereof. In some examples, the linear actuator may be a jackscrew assembly and the linearly displaceable element may be a lifting screw of the jackscrew assembly. The linearly displaceable element may be linearly displaceable relative to the elongate housing, such as by rotation of a nut that is in threaded engagement with the lifting screw when the linear actuator is a jackscrew assembly. Operation of the linear actuator can cause a linear displacement of the linearly displaceable element relative to the housing. A connecting element can be located at a distal end of the linearly displaceable element and may be linearly displaced relative to the housing along with the linearly displaceable element.

As indicated in block 506, a mooring line can be coupled between the submerged anchor and the connecting element of the mooring line tensioning device. The mooring line may be one of a plurality of mooring lines coupled between a plurality of submerged anchors and multiple mooring line tensioning devices coupled to the floating platform.

As indicated in block 508, if the mooring line is subjected to an excessive or an inadequate amount of tension when coupled, the mooring line tensioning device can be used to adjust the mooring line tension by linearly displacing the linearly displaceable element relative to the housing. This tension adjustment can be performed without decoupling the mooring line or the mooring line tensioning device. For example, when the linear actuator is jackscrew assembly, a remotely operated vehicle (ROV) can operate a submersible rotary tool to raise or lower the lifting screw of the jackscrew assembly by rotating an input shaft of the jackscrew assembly.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A mooring line tensioning device comprising:
an elongate housing having a base portion at a distal end, and an open interior;
a suspension element coupled to the elongate housing at a proximal end thereof and positionable to pivotably couple the elongate housing to a floating platform;
a linear actuator coupled to the base portion, a linearly displaceable element of the linear actuator extending through the base portion and into the open interior of the elongate housing; and
a connecting element at a distal end of the linearly displaceable element, the connecting element positionable to couple the linearly displaceable element to an anchored mooring line, wherein the linearly displaceable element is linearly displaceable relative to the elongate housing to adjust a tension of the anchored mooring line; optionally, further comprising at least one lifting tab extending from the suspension element, the housing, or both, to lift and position the device relative to the floating platform.

2. The mooring line tensioning device of claim 1, wherein:
the housing further includes a pair of opposed suspension element mounting arms that are separated by a space at the proximal end thereof, and
a bore through each arm, the bores aligned on a common central axis.

3. The mooring line tensioning device of claim 2, wherein:
the suspension element includes a pivot bore extending therethrough in a direction perpendicular to a central axis of the suspension element; and
the suspension element resides in the space between the suspension element mounting arms of the housing and is pivotably coupled to the housing by a coupling pin through the bores in the suspension element mounting arms and the pivot bore in the suspension element.

4. The mooring line tensioning device of claim 1, wherein the linear actuator is a jackscrew assembly and the linearly displaceable element is a lifting screw of the jackscrew assembly, the jackscrew assembly further comprising a mounting base that is secured to the base of the housing; optionally, wherein the jackscrew assembly further includes:
a nut in threaded engagement with the lifting screw; and
a worm drive having a worm wheel coupled to the nut, the worm drive operable to raise or lower the lifting screw relative to the housing by rotation of the nut; further optionally, wherein the jackscrew assembly further includes at least one remotely operated vehicle (ROV) bucket coupled to a rotatable input shaft of the worm drive, the ROV bucket engageable by a submersible torque tool to raise or lower the lifting screw by rotating the input shaft of the worm drive.

5. A floating platform position securement system comprising:
a mooring line tensioning device comprising:
an elongate housing having a base portion at a distal end, and an open interior;
a suspension element coupled to the elongate housing at a proximal end thereof and positionable to pivotably couple the elongate housing to the floating platform;
a linear actuator coupled to the base portion, a linearly displaceable element of the linear actuator extending through the base portion and into the open interior of the elongate housing; and
a connecting element at a distal end of the linearly displaceable element, the connecting element positionable to couple the linearly displaceable element to an anchored mooring line, wherein the linearly displaceable element is linearly displaceable relative to the elongate housing to adjust a tension of the anchored mooring line; and
a mooring line tensioning device coupling structure located on the floating platform, the coupling structure including a suspension element retention cavity positionable to receive and releasably retain the suspension element of the mooring line tensioning device such that the mooring line tensioning device is pivotably suspendible from the floating platform by engagement of the suspension element with the suspension element retention cavity; optionally, wherein the floating platform is a floating wind turbine platform.

6. The floating platform position securement system of claim 5, wherein:
the housing of the mooring line tensioning device further includes a pair of opposed suspension element mounting arms that are separated by a space at the proximal end thereof,
each arm includes a bore therethrough, the bores aligned on a common central axis;
the suspension element includes a pivot bore extending therethrough in a direction perpendicular to a central axis of the suspension element; and
the suspension element resides in the space between the suspension element mounting arms of the housing and is pivotably coupled to the housing by a coupling pin through the bores in the suspension element mounting arms and the pivot bore in the suspension element, whereby the housing of the mooring line tensioning device is rendered rotatable in a first dimension.

7. The floating platform position securement system of claim 6, wherein:
the suspension element and the suspension element retention cavity are both cylindrical in shape and the suspension element is rotatable within the suspension element retention cavity; and
the housing of the mooring line tensioning device is rendered rotatable in a second dimension that is perpendicular to the first dimension by the rotatability of the suspension element relative to the suspension element retention cavity.

8. The floating platform position securement system of claim 5, wherein the linearly displaceable element of the mooring line tensioning device is a lifting screw of a jackscrew assembly that is secured to the base of the mooring line tensioning device housing.

9. The floating platform position securement system of claim 8, further comprising a remotely operated vehicle (ROV) bucket coupled to a rotatable input shaft of the jackscrew assembly, the ROV bucket engageable by a submersible rotary tool to raise or lower the lifting screw of the mooring line tensioning device by rotating the input shaft of the jackscrew assembly.

10. The floating platform position securement system of claim 5, wherein:
the mooring line tensioning device is pivotably suspended from the floating platform by engagement of the suspension element of the mooring line tensioning device with the suspension element retention cavity of the floating platform; and
a submerged mooring line couples a submerged anchor to the connecting element of the mooring line tensioning device.

11. The floating platform position securement system of claim 5, wherein the mooring line tensioning device coupling structure is located in a float that is affixed to a pontoon of the floating platform.

12. A method comprising:
coupling a mooring line tensioning device to a floating platform having a mooring line tensioning device coupling structure, the mooring line tensioning device comprising:
an elongate housing having a base portion at a distal end, and an open interior;
a suspension element coupled to the elongate housing at a proximal end thereof, the suspension element engaged with and releasably retained in a suspension element retention cavity of the mooring line tensioning device coupling structure;
a linear actuator coupled to the base portion, a linearly displaceable element of the linear actuator extending through the base portion into the open interior of the elongate housing and linearly displaceable relative to the elongate housing; and
a connecting element at a distal end of the linearly displaceable element;
coupling an anchored mooring line to the connecting element of the mooring line tensioning device; and
adjusting a tension of the mooring line using the mooring line tensioning device by operating the linear actuator to cause a linear displacement of the linearly displaceable element relative to the housing; optionally, wherein the floating platform is a floating wind turbine platform.

13. The method of claim 12, wherein the linear actuator is a jackscrew assembly and the linearly displaceable element is a lifting screw of the jackscrew assembly, and wherein the lifting screw is linearly displaced relative to the housing by rotating an input shaft of the jackscrew assembly with a submersible rotary tool to adjust a tension of the mooring line.

14. The method of claim 13, wherein the submersible rotary tool is operated by a remotely operated vehicle (ROV).

15. The method of claim 12, wherein the suspension element retention cavity is located in a float of the floating platform, and coupling the mooring line tensioning device to the floating platform includes releasably locking the suspension element of the mooring line tensioning device in rotatable engagement with the suspension element retention cavity.
